# EUROPEAN PATENT SPECIFICATION

(11) **EP 2 955 415 B1**
(45) Date of publication and mention of the grant of the patent: **18.07.2018**
(21) Application number: 14749346.4
(22) Date of filing: 28.01.2014
(51) Int. Cl.: F16H 7/12, F16H 7/08

(54) **TENSION ADJUSTMENT DEVICE**
SPANNUNGSEINSTELLUNGSVORRICHTUNG
DISPOSITIF DE RÉGLAGE DE TENSION

(30) Priority: 07.02.2013 CN 201310048410
(43) Date of publication of application: 16.12.2015
(73) Proprietor: Gates Corporation, Denver, CO 80202 (US)
(72) Inventor: HAO, Minchun, Shanghai 200131 (CN); FU, Hongliang, Shanghai 200131 (CN); ZHOU, Huabin, Shanghai 200131 (CN)
(74) Representative: Carpmaels & Ransford LLP
(86) International application number: PCT/CN2014/071653
(87) International publication number: WO 2014/121719

(56) References cited:
- WO-A1-2006/105656
- CN-A- 101 218 454
- CN-A- 102 022 492
- CN-C- 100 441 912
- CN-U- 201 963 819
- DE-A1-102006 047 095
- DE-A1-102007 049 906
- DE-A1-102007 049 906
- JP-A- H1 089 427
- JP-B2- 2 893 263

## Description

### Technical Field

The present invention is related to a tension adjustment device which comprises an electro-static discharge path for eliminating the static electricity generated during the operation of the tension adjustment device.

### Background

A tension adjustment device is applied to transmission equipment broadly. The transmission component of the transmission equipment, such as a belt or chain, typically abuts against a tension wheel of the tension adjustment device, so that the transmission component is tensioned through the tension wheel during the operation of the transmission equipment. The tension adjustment device generally comprises a swing arm and a tension assembly, in which the swing arm is rotatably fixed to a fixing base via a fixing assembly. The fixing base can be a cylinder body or mount of an engine for example.

A Chinese patent CN100441912C discloses a tension adjustment device for a belt driven by an auxiliary machine, which is used to ensure the seal of the swing center of the pulley as a bearing tension wheel for a long time. This tension adjustment device is provided with a pulley arm which can swing relative to a fixing shaft. A sliding bearing is arranged between the pulley arm and the fixing shaft.

The above patent is developed for solving the seal problem in the tension adjustment device. However, in practice, the swing arm will swing frequently relative to the fixing base, because the transmission component of the transmission equipment is needed to be tensioned frequently through the tension wheel, in which case, a static electricity is readily to be generated in the tension adjustment device. In fact, the sliding bearing is typically formed of plastic material with self-lubricating. The plastic material is electric insulated and thus can not eliminate the static electricity generated in the pulley arm of the tension adjustment device, so that the static electricity is deposited and might result in electric spark. In addition, in the case of the sliding bearing is made of conductive material such as copper, the surface of the sliding bearing would be provided with plastic material with self-lubricating so as to ensure the lubrication of the sliding bearing. Therefore, it is impossible to eliminate the static electricity generated in the pulley arm of the tension adjustment device, so that the static electricity is deposited and might result in electric spark which can cause failure or accident such as fire hazard.

### Summary

Therefore, an object of the present invention is to provide a tension adjustment device so as to overcome the above drawbacks in the art. An electro-static discharge path can be formed inside the tension adjustment device, in order to eliminate the static electricity generated during the operation to prevent accident occurred.

Another object of the present invention is to provide an electro-static discharge member for forming the electro-static discharge path, which can be used to eliminate the static electricity while maintaining a small friction between the tension adjustment device and other components, so as to minimize the effect to the operation of the tension adjustment device and enhance the life of the tension adjustment device. In this case, the present invention is particularly adapted to a tension adjustment device which is difficult to or even can not be detached during the life thereof. The cost for maintenance and replacement could be reduced and the operation efficiency of the device could be improved, due to the electro-static discharge member.

The above objects are achieved by a tension adjustment device, comprising the features of claim 1. By means of the above solution, an electro-static discharge path is formed in the tension adjustment device, so as to eliminate the static electricity generated during the operation of the tension adjustment device, so that the tension adjustment device can be running safely.

In one embodiment, the electro-static discharge member is contacted with the first sealing cover and the swing arm shaft, via points, lines or partial surfaces. In this way, there is a small friction between the electro-static discharge member and the first sealing cover and the swing arm shaft, due to the small contacting area therebetween, so as to not obstruct the normal operation of the tension adjustment device, while the wear can be reduced so that the life of the electro-static discharge member is extended.

In one embodiment, the electro-static discharge member is contacted elastically with the first sealing cover and the swing arm shaft. For example, the electro-static discharge member can be elastic, which in turn make the electro-static discharge member to minimize the axial friction.

In one embodiment, the wave-shaped spring is made of electric conductive material, such as electric conductive metal.

In one embodiment, the electro-static discharge member can comprise a plurality of overlapped wave-shaped springs.

In one embodiment, the wave-shaped spring is contacted with the first sealing cover through at least three contacting positions, and/or the wave-shaped spring is contacted with the swing arm shaft through at least three contacting positions. In this way, a balance between the elimination of the static electricity and the wear can be obtained advantageously.

In one embodiment, the first sealing cover is separate from the swing arm shaft. In this way, the wear of the first sealing cover is avoided, so as to extend the life of the tension adjustment device.

In one embodiment, the bearing assembly is separate from the electro-static discharge member, so as to reduce the wear of the electro-static discharge member.

In one embodiment, a second sealing cover is arranged at another end portion of the fixing assembly, the bearing assembly comprises a first sliding bearing adjacent to the first sealing cover and a second sliding bearing adjacent to the second sealing cover, and an end of the second sliding bearing adjacent to the second sealing cover is formed with a bearing flange extending radially.

In one embodiment, fixing shaft boss portions are formed at both ends of the fixing shaft, and the first and second sealing covers hermetically cover the fixing shaft boss portions at both ends of the fixing shaft.

In one embodiment, the tension adjustment device further comprises a tension adjustment assembly, one end of which is fixed rotatably to the swing arm, and another end of which is fixed rotatably to the fixing assembly.

In one embodiment, the fixing assembly includes a fixing shaft which is provided integrally with a fastener and extends through the first sealing cover, and wherein the fastener is used to fix the swing arm and is a bolt or rivet.

In one embodiment, the fixing assembly includes a fixing shaft and a fastener which extends through the first sealing cover and a hole in the fixing shaft so as to fix the swing arm, and wherein the fastener is a bolt or rivet.

In one embodiment, the bearing assembly is electric insulated.

In one embodiment, the electro-static discharge member surrounds the fixing shaft, or the electro-static discharge member comprises a plurality of separate components surrounding the fixing shaft.

In this way, an electro-static discharge path can be formed in the tension adjustment device, so as to eliminate the static electricity generated during the operation of the tension adjustment device, meanwhile the electro-static discharge member has small wear and long life.

### Brief Description of the Figures

These and other features of the invention will be more fully made apparent by the detailed description which follows, the claims and accompanying drawing figures herewith, the entirety of which, taken together, form the specification of the invention, in which:
Figure 1 is a top view of a tension adjustment device for transmission equipment according to the present invention.
Figure 2 is a bottom view of a tension adjustment device for transmission equipment according to the present invention.
Figure 3 is a perspective view of a tension adjustment device for transmission equipment that has been assembled according to the present invention.

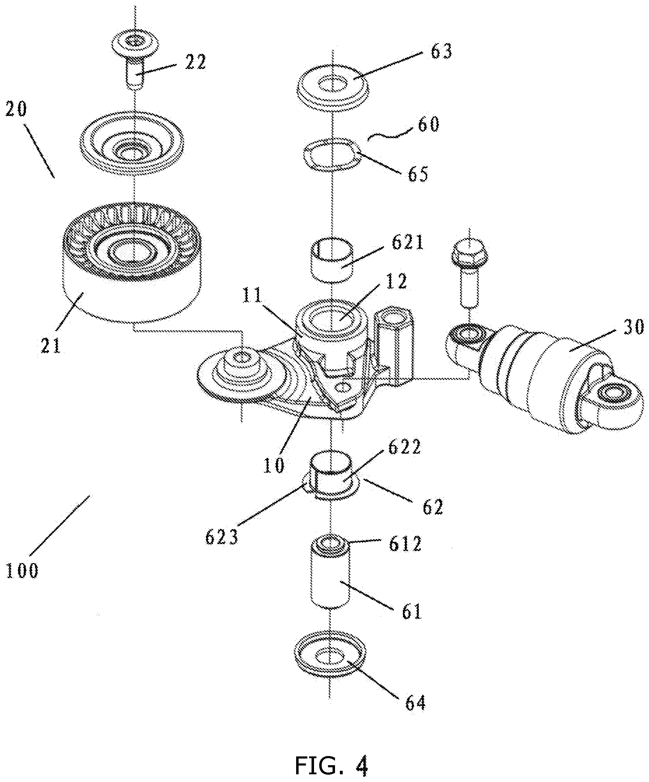

Figure 4 is an exploded perspective view of a tension adjustment device for transmission equipment according to the present invention.

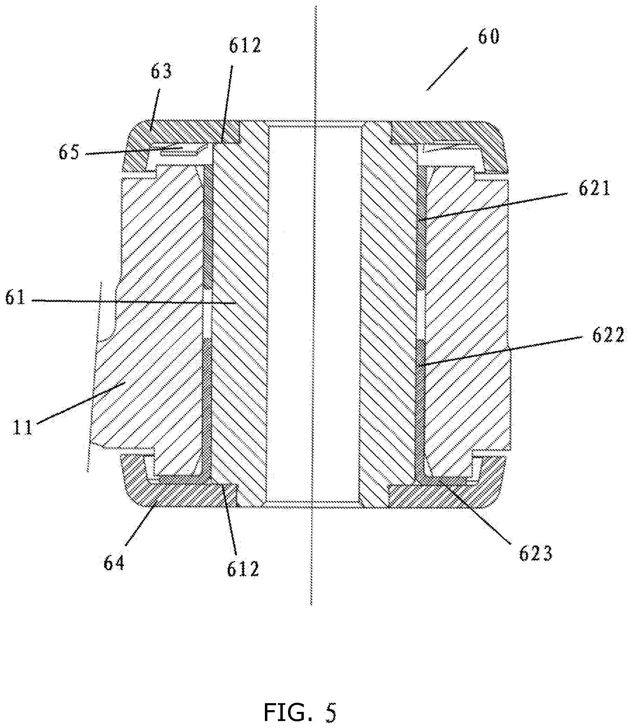

Figure 5 is a partial cross section view taken along the line A-A in figure 1.

### Embodiments of the Invention

The foregoing and other objectives, features, and advantages of the invention will be more readily understood upon consideration of the following detailed description of the invention, taken in conjunction with the accompanying drawings, in which preferred embodiments of the invention are illustrated by way of example. It is to be expressly understood, however, that the drawings are for illustration and description only and are not intended as a definition of the limits of the invention.

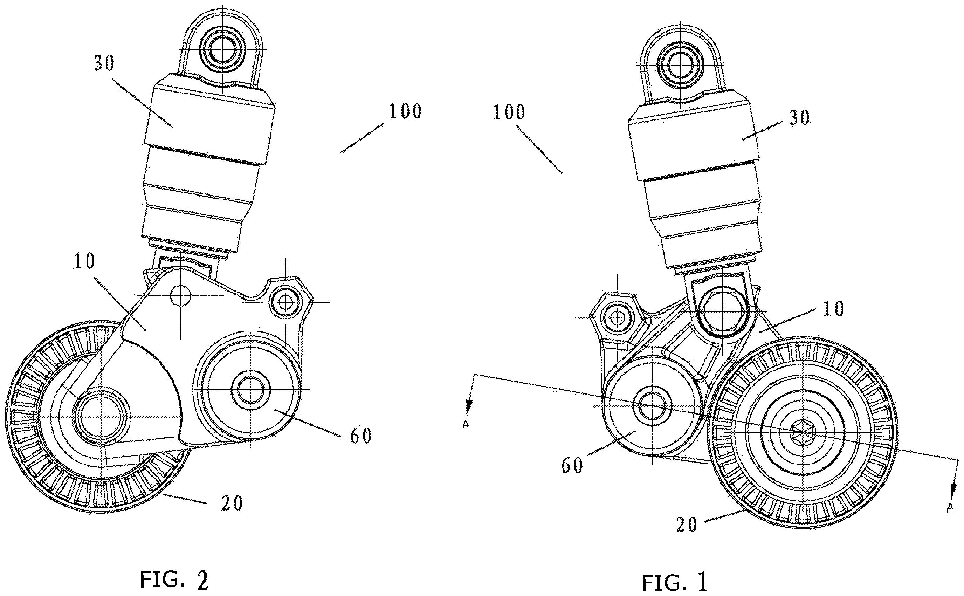

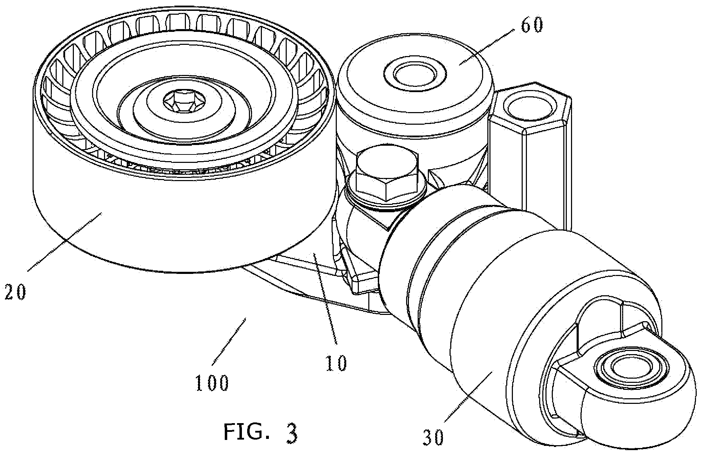

With reference to figures 1 to 3, a top view, a bottom view and a perspective view of a tension adjustment device for transmission equipment according to the present invention are shown respectively. The tension adjustment device 100 is mounted onto a fixing base (not shown), which the fixing base can be a cylinder body or mount of an engine for example.

The tension adjustment device 100 comprises two parts, a swing arm 10 and a tensioning assembly 20. The swing arm 10 is rotatably fixed via a fixing assembly 60. For example, the swing arm 10 is rotatably fixed to the fixing base via a fixing assembly 60. The tensioning assembly 20 is rotatably fixed to the swing arm 10.

In a preferred embodiment, the tension adjustment device 100 further comprises a tension adjustment assembly 30, one end of which is fixed rotatably to the swing arm 10, and another end of which is fixed rotatably to the fixing base. The tension adjustment assembly 30 can be configured in a conventional manner in the art. For example, a well known hydraulic automated tensioner or pneumatic automated tensioner can be employed. This will not be described in detail here.

In particular, in one embodiment, the swing arm 10 is rotatably fixed to the fixing base via the fixing assembly 60, so that the swing arm 10 can rotate about an axis of the fixing assembly 60 and thus can rotate relative to the fixing base freely. The tensioning assembly 20 is provided with a tensioning wheel 21 which is fixed to the swing arm 10 via a bolt 22, so that the tensioning wheel 21 can rotate about an axis of the bolt 22. The transmission component of the transmission equipment is maintained to contact with the tensioning wheel 21, so that it is tensioned by the tensioning wheel 21. During operation of the transmission equipment, the tension adjustment assembly 30 functions to adjust the transmission component of the transmission equipment for the swing arm 10 and the tensioning assembly 20. These will not be described in detail here, since they are conventional in the art.

The swing arm 10 is provided with a swing arm shaft 11, and as can be seen from the exploded view, the swing arm shaft 11 extends from the opposed sides of the swing arm 10. A through hole 12 is formed in the swing arm shaft 11. The fixing assembly 60 extends through the through hole 12 so as to fix the swing arm 10 to the fixing base.

The fixing assembly 60 is assembled in the through hole 12 and a bearing assembly 62 is arranged between the fixing assembly 60 and the through hole 12. For example, in one embodiment, the fixing assembly 60 is provided with a fixing shaft 61 which is assembled in the through hole 12 via a bearing assembly 62. In particular, the fixing shaft 61 is assembled in the through hole 12, and the bearing assembly 62 is arranged between the fixing shaft 61 and the through hole 12. A first sealing cover 63 and a second sealing cover 64 are arranged at both ends of the fixing assembly 60 respectively. For example, in one embodiment, the first sealing cover 63 and the second sealing cover 64 are positioned at both ends of the fixing shaft 61. In order that the first sealing cover 63 and the second sealing cover 64 can be fitted closely, fixing shaft boss portions 612 are formed at both ends of the fixing shaft 61, and the first sealing cover 63 and the second sealing cover 64 hermetically cover the fixing shaft boss portions 612 at both ends of the fixing shaft 61, so that a seal is obtained for the junction between the fixing assembly 60 and the swing arm 10, so as to prevent substance such as dust from entering. As known in the art, the sliding bearing is typically formed of insulated material with self-lubricating to ensure the lubrication of the bearing assembly. Alternatively, insulated material with self-lubricating is coated onto the surfaces of the bearing assembly, which make the bearing assembly insulated.

Generally, if the swing arm shaft 11 is contacted with the first sealing cover 63, during the operation of the tension adjustment device 100, the swing arm shaft 11 will move relative to the first sealing cover 63 frequently, which results in the wear of the swing arm shaft 11 and the first sealing cover 63, particularly the wear of the first sealing cover 63. Therefore, in a preferred embodiment, the swing arm shaft 11 is separate from the first sealing cover 63, i.e. the swing arm shaft 11 is not contacted with the first sealing cover 63, so as to avoid the wear of the first sealing cover 63 and extend the life of the tension adjustment device 100. However, in this case, the static electricity can not be transferred from the swing arm shaft 11 to the first sealing cover 63, which results in deposition of the static electricity. In practice, both sealing covers are not contacted with the swing arm shaft 11.

In a preferred embodiment of the present invention, the bearing assembly 62 comprises a first sliding bearing 621 adjacent to the first sealing cover 63 and a second sliding bearing 622 adjacent to the second sealing cover 64. In practice, the second sealing cover 64 and the second sliding bearing 622 are closer to the fixing base than the first sealing cover 63 and the first sliding bearing 621. Generally, an end of the second sliding bearing 622 adjacent to the second sealing cover 64 is formed with a bearing flange 623. The bearing flange 623 is used to isolate axially the second sealing cover 64 and the swing arm shaft 11, or is arranged axially between the second sealing cover 64 and the swing arm shaft 11.

In one embodiment, the fixing assembly 60 further includes a fastener (not shown) which extends through the first sealing cover 63 and a hole in the fixing shaft 61 so as to fix the swing arm 10. In particular, in the shown embodiment, the fastener extends through the first sealing cover 63, the second sealing cover 64 and the hole in the fixing shaft 61 so as to fix the swing arm 10 to the fixing base. Therefore, the swing arm 10 could swing or rotate relative to the fixing base freely, so as to adapt to the requirement of tension adjustment. The fastener can be a bolt, a rivet or other fastener known in the art.

Alternatively, in another embodiment, the fixing shaft 61 of the fixing assembly 60 is provided integrally with a fastener and extends through the first sealing cover 63. The fastener is used to fix rotatably the swing arm 10 to the fixing base. Therefore, the swing arm 10 could swing or rotate relative to the fixing base freely, so as to adapt to the requirement of tension adjustment. The fastener can be a bolt, a rivet or other fastener known in the art.

During the operation of the tension adjustment device 100, due to the frequent swing or rotation of the swing arm 10 relative to the fixing shaft 61 via the bearing assembly 62, the static electricity is generated therebetween. In order to eliminate such static electricity, according to an embodiment of the present invention, an electro-static discharge member 65 is arranged between the first sealing cover 63 and the swing arm shaft 11, and the electro-static discharge member 65 makes contact with the first sealing cover 63 and the swing arm shaft 11 respectively, so as to form an electro-static discharge path.

In an embodiment of the present invention, due to the electro-static discharge member 65, the static electricity generated during the swing or rotation of the swing arm 10 relative to the fixing shaft 61 via the bearing assembly 62, can be transferred through the swing arm shaft 11, the electro-static discharge member 65 and to the first sealing cover 63, and further through the fixing shaft 61, the fastener and then to the fixing base (a cylinder body or mount of an engine), so as to eliminate the static electricity.

In order to form the above electro-static discharge path, the components in the electro-static discharge path shall be made of electric conductive material, that is, the swing arm shaft 11, the electro-static discharge member 65, the first sealing cover 63, the fixing shaft 61 and the fastener are made of electric conductive material. The material can be conventional in the art.

In order to reduce the wear of the electro-static discharge member, the bearing assembly is separate from the electro-static discharge member, that is, the bearing assembly is not contacted with the electro-static discharge member. Therefore, in a preferred embodiment, the electro-static discharge member 65 is only contacted with the swing arm shaft 11.

Moreover, in order to further reduce the wear of the electro-static discharge member, the contacting area between the electro-static discharge member 65 and the first sealing cover 63, the swing arm shaft 11 could be reduced. In a preferred embodiment, the electro-static discharge member 65 is contacted with the first sealing cover 63 and the swing arm shaft 11 respectively, via points, lines or partial surfaces. In this way, the friction can be reduced and the life of the electro-static discharge member could be extended, since only a part of the surfaces of the electro-static discharge member 65 is contacted with the first sealing cover 63 and the swing arm shaft 11. The electro-static discharge member 65 is maintained to contact with the first sealing cover 63 and the swing arm shaft 11, so as to ensure the normal operation of the electro-static discharge path. In addition, in the case of point, line or partial surface contact, due to the small contacting area, the resistance formed between the electro-static discharge member 65 and the first sealing cover 63, the swing arm shaft 11 is small as well, so as to facilitate the relative rotation between the first sealing cover 63 and the swing arm shaft 11 and not to obstruct the normal operation of the tension adjustment device.

According to the present invention, the electro-static discharge member 65 could be configured in any suitable manner, as long as it can be used to eliminate the static electricity generated during the operation of the tension adjustment device 100. In one embodiment, the electro-static discharge member 65 could be arranged surrounding the fixing shaft 61. In another embodiment, the electro-static discharge member 65 could comprise a plurality of separate components surrounding the fixing shaft 61, which could be for example gaskets or the like.

In a preferred embodiment of the present invention, the electro-static discharge member 65 is contacted elastically with the first sealing cover 63 and the swing arm shaft 11. For example, in one embodiment, the electro-static discharge member 65 is elastic and disposed elastically and conductively between the sealing cover and the swing arm shaft. It is advantageous that the elastic electro-static discharge member can be used to maintain the reliable electric connection among the three components only via small axial force.

In a preferred embodiment of the present invention, the electro-static discharge member 65 can be a wave-shaped spring. In other embodiment, the electro-static discharge member 65 can also be a coil spring or a Belleville spring. Generally, the wave-shaped spring has an elasticity sufficient to enable to abut against the first sealing cover 63 and the swing arm shaft 11 and maintain to contact with them.

The electro-static discharge member 65 can comprise a plurality of wave-shaped springs which could be overlapped so as to enhance the axial force.

The wave-shaped spring could be made of any suitable electric conductive material, such as electric conductive metal, so as to ensure a sufficient elasticity while eliminating the static electricity.

The wave-shaped spring is formed with peak portions and valley portions, and in practice, the peak portions and the valley portions are contacted with the first sealing cover 63 and the swing arm shaft 11 respectively, via points, lines or partial surfaces. The point, line or partial surface contact could be selected according to the shape and structure of the peak portions and the valley portions.

Generally, the wave-shaped spring is formed with a plurality of peak portions and a plurality of valley portions, so that there are several contacting positions between the wave-shaped spring and the first sealing cover 63, the swing arm shaft 11. The point, line or partial surface contact could be selected for these contacting positions independently. It is noted that the number of the contacting positions is not necessary to be the same as the number of the peak portions and the valley portions, that is, some peak portions or valley portions may not be contacted with the first sealing cover 63 and the swing arm shaft 11, so as to make such structure to adapt to various applications for the wave-shaped spring and the first sealing cover 63, the swing arm shaft 11.

In a preferred embodiment of the present invention, the wave-shaped spring is contacted with the first sealing cover 63 through at least three contacting positions, and/or the wave-shaped spring is contacted with the swing arm shaft 11 through at least three contacting positions. In this way, a balance between the elimination of the static electricity and the wear can be obtained advantageously. Of cause, the number of the contacting positions can be any suitable number.

## Claims

1. A tension adjustment device, (100), comprising:
a swing arm (10) being rotatably fixed via a fixing assembly; (60); and
a tensioning assembly (20) being rotatably fixed to the swing arm,
wherein the swing arm is provided with a swing arm shaft, (11), a hole (12) is formed in the swing arm shaft, the fixing assembly is assembled in the hole, a bearing (62) is arranged between the fixing assembly and the hole, a first sealing cover (63) is arranged at one end portion of the fixing assembly, and **characterized in that** an electro-static discharge member (65) is arranged between the first sealing cover and the swing arm shaft, and the electro-static discharge member makes contact with the first sealing cover and the swing arm shaft respectively, so as to form an electro-static discharge path,
wherein the electro-static discharge member is a Belleville spring or a wave-shaped spring, wherein the wave-shaped spring is formed with peak portions and valley portions, and wherein the peak portions and the valley portions are contacted with the first sealing cover and the swing arm shaft respectively.

2. The tension adjustment device according to claim 1, wherein the electro-static discharge member is contacted elastically with the first sealing cover and the swing arm shaft.

3. The tension adjustment device according to claim 1, wherein the wave-shaped spring is made of electric conductive metal.

4. The tension adjustment device according to claim 1, wherein the electro-static discharge member comprises a plurality of overlapped wave-shaped springs.

5. The tension adjustment device according to claim 1, wherein the wave-shaped spring is contacted with the first sealing cover through at least three contacting positions, and/or the wave-shaped spring is contacted with the swing arm shaft through at least three contacting positions.

6. The tension adjustment device according to claim 1, wherein the first sealing cover is separate from the swing arm shaft.

7. The tension adjustment device according to claim 1, wherein the bearing assembly is separate from the electro-static discharge member.

8. The tension adjustment device according to claim 1, wherein a second sealing cover is arranged at another end portion of the fixing assembly, the bearing assembly comprises a first sliding bearing adjacent to the first sealing cover and a second sliding bearing adjacent to the second sealing cover, and an end of the second sliding bearing adjacent to the second sealing cover is formed with a bearing flange extending radially.

9. The tension adjustment device according to claim 1, further comprising a tension adjustment assembly, one end of which is fixed rotatably to the swing arm, and another end of which is fixed rotatably to the fixing assembly.

10. The tension adjustment device according to claim 1, wherein the fixing assembly includes a fixing shaft which is provided integrally with a fastener and extends through the first sealing cover, and wherein the fastener is used to fix the swing arm and is a bolt or rivet.

11. The tension adjustment device according to claim 1, wherein the fixing assembly includes a fixing shaft and a fastener which extends through the first sealing cover and a hole in the fixing shaft so as to fix the swing arm, and wherein the fastener is a bolt or rivet.

12. The tension adjustment device according to claim 1, wherein the bearing assembly is electric insulated.

13. The tension adjustment device according to claim 10 or 11, wherein the electro-static discharge member surrounds the fixing shaft, or the electro-static discharge member comprises a plurality of separate components surrounding the fixing shaft.

## Patentansprüche

1. Spannungseinstellungsvorrichtung (100), umfassend:
einen Schwingarm (10), der über eine Festlegungsanordnung (60) drehbar festgelegt ist, und
eine Spannungsanordnung (20), die drehbar an dem Schwingarm festgelegt ist,
wobei der Schwingarm mit einem Schwingarmschaft (11) versehen ist, ein Loch (12) im Schwingarmschaft ausgebildet ist, die Festlegungsanordnung im Loch montiert ist, ein Lager (62) zwischen der Festlegungsanordnung und dem Loch angeordnet ist, eine erste Abdichtungsabdeckung (63) an einem Endabschnitt der Festlegungsanordnung angeordnet ist, **dadurch gekennzeichnet, dass** ein Glied (65) zur elektrostatischen Entladung zwischen der ersten Abdichtungsabdeckung und dem Schwingarmschaft angeordnet ist und das Glied zur elektrostatischen Entladung die erste Abdichtungsabdeckung bzw. den Schwingarmschaft kontaktiert, um einen elektrostatischen Entladungsweg zu bilden,
wobei das Glied zur elektrostatischen Entladung eine Tellerfeder oder eine wellenförmige Feder ist, wobei die wellenförmige Feder mit Bergabschnitten und Talabschnitten ausgebildet ist und wobei die Bergabschnitte und die Talabschnitte mit der ersten Abdichtungsabdeckung bzw. dem Schwingarmschaft kontaktiert werden.

2. Spannungseinstellungsvorrichtung nach Anspruch 1, wobei das Glied zur elektrostatischen Entladung elastisch mit der ersten Abdichtungsabdeckung und dem Schwingarmschaft kontaktiert wird.

3. Spannungseinstellungsvorrichtung nach Anspruch 1, wobei die wellenförmige Feder aus elektrisch leitendem Metall hergestellt ist.

4. Spannungseinstellungsvorrichtung nach Anspruch 1, wobei das Glied zur elektrostatischen Entladung eine Vielzahl von überlappenden wellenförmigen Federn umfasst.

5. Spannungseinstellungsvorrichtung nach Anspruch 1, wobei die wellenförmige Feder durch mindestens drei Kontaktierpositionen mit der ersten Abdichtungsabdeckung kontaktiert wird und/oder die wellenförmige Feder durch mindestens drei Kontaktierpositionen mit dem Schwingarmschaft kontaktiert wird.

6. Spannungseinstellungsvorrichtung nach Anspruch 1, wobei die erste Abdichtungsabdeckung vom Schwingarmschaft getrennt ist.

7. Spannungseinstellungsvorrichtung nach Anspruch 1, wobei die Lageranordnung vom Glied zur elektrostatischen Entladung getrennt ist.

8. Spannungseinstellungsvorrichtung nach Anspruch 1, wobei eine zweite Abdichtungsabdeckung an einem anderen Endabschnitt der Festlegungsanordnung angeordnet ist, die Lageranordnung benachbart der ersten Abdichtungsabdeckung ein erstes Gleitlager und benachbart der zweiten Abdichtungsabdeckung ein zweites Gleitlager umfasst und ein Ende des der zweiten Abdichtungsabdeckung benachbart liegenden Gleitlagers mit einem sich radial erstreckenden Lagerflansch ausgebildet ist.

9. Spannungseinstellungsvorrichtung nach Anspruch 1, ferner umfassend eine Spannungseinstellungsanordnung, von der ein Ende drehbar am Schwingarm festgelegt ist und von der ein anderes Ende drehbar an der Festlegungsanordnung festgelegt ist.

10. Spannungseinstellungsvorrichtung nach Anspruch 1, wobei die Festlegungsanordnung einen Festlegungsschaft aufweist, der integral mit einer Befestigungsvorrichtung versehen ist und sich durch die erste Abdichtungsabdeckung erstreckt, und wobei die Befestigungsvorrichtung zum Festlegen des Schwingarms dient und es sich dabei um einen Bolzen oder einen Niet handelt.

11. Spannungseinstellungsvorrichtung nach Anspruch 1, wobei die Festlegungsanordnung einen Festlegungsschaft und eine Befestigungsvorrichtung aufweist, die sich durch die erste Abdichtungsabdeckung und ein Loch im Festlegungsschaft erstreckt, um den Schwingarm festzulegen, und wobei die Befestigungsvorrichtung ein Bolzen oder ein Niet ist.

12. Spannungseinstellungsvorrichtung nach Anspruch 1, wobei die Lageranordnung elektrisch isoliert ist.

13. Spannungseinstellungsvorrichtung nach Anspruch 10 oder 11, wobei das Glied zur elektrostatischen Entladung den Festlegungsschaft umgibt oder das Glied zur elektrostatischen Entladung eine Vielzahl von getrennten, den Festlegungsschaft umgebenden Komponenten umfasst.

## Revendications

1. Dispositif (100) de réglage de tension, comprenant :
un bras oscillant (10) qui est fixé rotatif par le biais d'un ensemble de fixation (60) ; et
un ensemble tendeur (20) qui est fixé rotatif au bras oscillant,
dans lequel le bras oscillant est muni d'un arbre (11) de bras oscillant, un trou (12) est pratiqué dans l'arbre de bras oscillant, l'ensemble de fixation est assemblé dans le trou, un palier (62) est disposé entre l'ensemble de fixation et le trou, un premier couvercle d'étanchéité (63) est disposé à une partie terminale de l'ensemble de fixation, et
**caractérisé en ce qu'**un élément (65) de décharge électrostatique est disposé entre le premier couvercle d'étanchéité et l'arbre de bras oscillant, et l'élément de décharge électrostatique est en contact respectivement avec le premier couvercle d'étanchéité et l'arbre de bras oscillant, de façon à constituer un trajet de décharge électrostatique,
dans lequel l'élément de décharge électrostatique est une rondelle Belleville ou une rondelle élastique ondulée, dans lequel la rondelle élastique ondulée est constituée de parties de crête et de parties de vallée, et
dans lequel les parties de crête et les parties de vallée sont en contact respectivement avec le premier couvercle d'étanchéité et l'arbre de bras oscillant.

2. Dispositif de réglage de tension selon la revendication 1, dans lequel l'élément de décharge électrostatique est en contact élastique avec le premier couvercle d'étanchéité et l'arbre de bras oscillant.

3. Dispositif de réglage de tension selon la revendication 1, dans lequel la rondelle élastique ondulée est faite d'un métal conducteur.

4. Dispositif de réglage de tension selon la revendication 1, dans lequel l'élément de décharge électrostatique comprend une pluralité de rondelles élastiques ondulées qui se chevauchent.

5. Dispositif de réglage de tension selon la revendication 1, dans lequel la rondelle élastique ondulée est en contact avec le premier couvercle d'étanchéité à travers au moins trois points de contact, et/ou la rondelle élastique ondulée est en contact avec l'arbre de bras oscillant à travers au moins trois points de contact.

6. Dispositif de réglage de tension selon la revendication 1, dans lequel le premier couvercle d'étanchéité est séparé de l'arbre de bras oscillant.

7. Dispositif de réglage de tension selon la revendication 1, dans lequel l'ensemble palier est séparé de l'élément de décharge électrostatique.

8. Dispositif de réglage de tension selon la revendication 1, dans lequel un second couvercle d'étanchéité est disposé à l'autre partie terminale de l'ensemble de fixation, l'ensemble palier comprend un premier palier lisse adjacent au premier couvercle d'étanchéité et un second palier lisse adjacent au second couvercle d'étanchéité, et une extrémité du second palier lisse adjacent au second couvercle d'étanchéité est conformée avec une butée de palier s'étendant radialement.

9. Dispositif de réglage de tension selon la revendication 1, comprenant en outre un ensemble de réglage de tension, dont une extrémité est fixée rotative au bras oscillant et dont une autre extrémité est fixée rotative à l'ensemble de fixation.

10. Dispositif de réglage de tension selon la revendication 1, dans lequel l'ensemble de fixation comprend un arbre de fixation qui est disposé d'une seule pièce avec une attache et traverse le premier couvercle d'étanchéité, et
dans lequel l'attache est utilisée pour fixer le bras oscillant et est un boulon ou un rivet.

11. Dispositif de réglage de tension selon la revendication 1, dans lequel l'ensemble de fixation comprend un arbre de fixation et une attache qui traverse le premier couvercle d'étanchéité et un trou dans l'arbre de fixation de façon à fixer le bras oscillant, et
dans lequel l'attache est un boulon ou un rivet.

12. Dispositif de réglage de tension selon la revendication 1, dans lequel l'ensemble palier est isolé électriquement.

13. Dispositif de réglage de tension selon la revendication 10 ou 11, dans lequel l'élément de décharge électrostatique entoure l'arbre de fixation, ou l'élément de décharge électrostatique comprend une pluralité de composants séparés entourant l'arbre de fixation.
